# EUROPEAN PATENT APPLICATION

(11) **EP 1 997 470 A1**
(43) Date of publication of application: **03.12.2008**
(21) Application number: 07738058.2
(22) Date of filing: 08.03.2007
(51) Int. Cl.: A61J 1/14, B65D 30/02, B65D 65/40

(54) **INFUSION SOLUTION BAG PACKAGE AND PACKING BAG**

(30) Priority: 10.03.2006 JP 2006065622
(71) Applicant: Kabushiki Kaisha Hosokawa Yoko, Tokyo 102-0084 (JP)
(72) Inventor: INUZUKA, Takeshi, Tokyo 102-0084 (JP); KOTANI, Takayuki, Tokyo 102-0084 (JP)
(74) Representative: Gillard, Richard Edward
(86) International application number: PCT/JP2007/054568
(87) International publication number: WO 2007/105601

(57) **Abstract**

A fluid supplement bag package has a protective bag having a sealant layer that will not be fused to a fluid supplement bag. The fluid supplement bag can be easily taken out of the protective bag. The fluid supplement bag package includes a fluid supplement bag 2 formed by sealing a fluid supplement in a pouch, and a protective bag 3 sealing up the fluid supplement bag 2 therein. The pouch is formed from a polypropylene film, and the protective bag 3 has an outer layer 4 of a polyester resin, and a sealant layer 7 of a polypropylene resin containing an ultrahigh-molecular-weight polypropylene.

## Description

### TECHNICAL FIELD

The present invention relates to a fluid supplement bag package formed by sealing a fluid supplement bag (a infusion container package) sealing up a fluid supplement (a infusion) in a protective bag, and a protective bag suitable for forming the fluid supplement bag package.

### BACKGROUND ART

Some fluid supplement bag used in hospitals are formed by sealing up a fluid supplement, such as a high-calorie nourishing fluid, in a pouch, and others are formed by sealing up a fluid supplement containing vitamins and amino acid in a pouch. Pouches to be used for containing a fluid supplement are formed from a polyvinyl chloride film.

Some protective bags for packaging a fluid supplement bag are formed from a laminated film formed by laminating a stretched polypropylene film, an ethylene-vinyl alcohol copolymer film and a low-density polyethylene film, some are formed from a laminated film formed by laminating a polyester film, a stretched nylon film, an aluminum foil and a nonoriented polypropylene film, and some are formed from a laminated film formed by laminating a transparent, metallized polyester film, a stretched nylon film and a nonoriented polypropylene film. A sealant layer, namely, an inner layer, of a laminated film is a layer of a polypropylene resin having an ordinary molecular weight.

The pouch of the fluid supplement bag is formed from a polyvinyl chloride film permeable to steam. Therefore, steam (water vapor) generated from the fluid supplement permeates the pouch and, consequently, the concentration of the fluid supplement changes.

To solve such a problem in the pouch of the fluid supplement bag, there has been developed a fluid supplement bag formed by sealing up a fluid supplement in a pouch impervious to steam generated from the fluid supplement so that the concentration of the fluid supplement may not change. This pouch is formed from a polypropylene film excellently impervious to steam generated from the fluid supplement.

To prevent the contamination of the fluid supplement bag during storage in hospitals or the like, it is usual to deliver a fluid supplement bag package formed by sealing up a heat-sterilized fluid supplement bag in a protective bag to hospitals or the like. It is possible that the heat-sterilized fluid supplement bag is contaminated when the heat-sterilized fluid supplement bag is sealed in the protective bag.

In some cases, a heat-sterilizing method that sterilizes, by heating, a fluid supplement bag package formed by sealing a fluid supplement bag in a protective bag is employed to surely avoid contaminating the fluid supplement bag in sealing the fluid supplement bag in the protective bag.

A protective bag formed from a laminated film formed by laminating a polyester film, a stretched nylon film, an aluminum foil and a nonoriented polypropylene film, and a protective bag formed from a laminated film formed by laminating a transparent, metallized polyester film, a stretched nylon film and a nonoriented polypropylene film among those for fluid supplement bag packages are satisfactory in barrier property and retorting resistance. Therefore, those protective bags are suitable for fluid supplement bag packages to be subjected to heat sterilization. Although protective bags formed from a laminated film formed by laminating a stretched polypropylene film, an ethylene-vinyl alcohol copolymer film and a low-density polyethylene film have barrier property, those protective bags are deficient in retorting resistance and hence are unsuitable for fluid supplement bag packages to be subjected to heat sterilization.
Patent document 1: JP H9-117489 A

### DISCLOSURE OF THE INVENTION

### Problem to be Solved b y the Invention

Although the protective bag of the foregoing fluid supplement bag package, formed from a polypropylene film provided with a layer of polypropylene resin having an ordinary molecular weight as a sealant layer can maintain the concentration of the fluid supplement after the fluid supplement bag has been taken out of the protective bag, the polypropylene film forming the protective bag, and the sealant layer melt during heat sterilization, the fluid supplement bag and the protective bag are fused together, and the fluid supplement bag cannot be easily taken out of the protective bag.

The present invention has been made to solve those problems and it is therefore an object of the present invention to provide a fluid supplement bag package including a fluid supplement bag and a protective bag and capable of maintaining the concentration of a fluid supplement contained in the fluid supplement bag after the fluid supplement bag has been taken out of the protective bag, of preventing the fluid supplement bag and protective bag from being fused together during heat sterilization, and of enabling the fluid supplement bag to be easily taken out of the protective bag, and a protective bag suitable for a fluid supplement bag package.

### Means for Solving the Problem

A fluid supplement bag package of the present invention includes a fluid supplement bag formed by sealing a fluid supplement in a pouch, and a protective bag sealing up the fluid supplement bag therein; wherein the pouch is formed from a polypropylene film, the protective bag has an outer layer of a polyester resin, and a sealant layer of a polypropylene resin containing an ultrahigh-molecular-weight polypropylene. The fluid supplement bag and the protective bag will not be fused together and the fluid supplement bag can be easily taken out of the protective bag.

A protective bag of the present invention is formed from a laminated film having an outer layer of a polyester resin and a sealant layer of a polypropylene resin containing an ultrahigh-molecular-weight polypropylene.

According to the present invention, the pouch of the fluid supplement bag is formed from a polypropylene film, and the sealant layer of the protective bag of the fluid supplement bag package is a layer of a polypropylene resin containing an ultrahigh-molecular-weight polypropylene. Thus the concentration of the fluid supplement can be maintained, the fluid supplement bag and the protective film will not be fused together by heat sterilization, and the fluid supplement bag can be easily taken out of the protective bag.

### BRIEF DESCRIPTION OF THE DRAWINGS

Fig. 1 is a plan view of a fluid supplement bag package according to the present invention; and
Fig. 2 is a perspective view of a laminated film for forming a protective bag included in the fluid supplement bag package of the present invention.

### BEST MODE FOR CARRYING OUT THE INVENTION

A fluid supplement bag package in a preferred embodiment according to the present invention will be described with reference to the accompanying drawings.

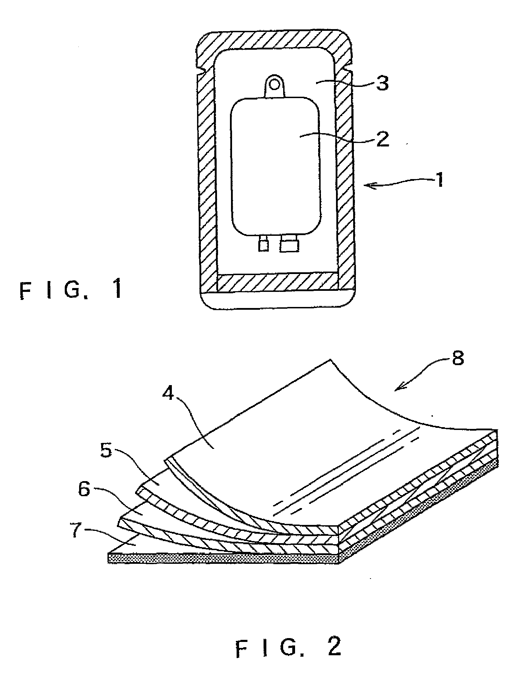

Referring to Fig. 1, a fluid supplement bag package 1 of the present invention includes a fluid supplement bag 2 formed by sealing up a fluid supplement, such as a high-calorie nourishing fluid, or a fluid supplement containing vitamins and amino acid in a pouch, and a protective bag 3 sealing up the fluid supplement bag 2 therein.

The pouch of the fluid supplement bag is formed from a polypropylene film to prevent steam generated from the fluid supplement from penetrating the pouch and leaking out.

The protective bag sealing up the fluid supplement bag therein is formed from a laminated film 8 shown in Fig. 2. The laminated film 8 is formed by laminating a 12 µm thick polyester film 4, a 15 µm thick stretched nylon film, a 9 µm thick aluminum foil 6, and a 70 µm thick nonoriented polypropylene resin film 7 containing an ultrahigh-molecular-weight polypropylene.

The nonoriented polypropylene resin film 7 containing an ultrahigh-molecular-weight polypropylene is formed by bonding a film of a polypropylene containing an ultrahigh-molecular-weight polypropylene to the aluminum foil 6 with a two-part adhesive. The nonoriented polypropylene resin film 7 can be bonded to the aluminum foil 6 by spreading, by an extrusion molding means, a polypropylene resin containing an ultrahigh-molecular-weight polypropylene on the aluminum foil 6.

The ultrahigh-molecular-weight polypropylene contained in the sealant layer 7 is a covalent polypropylene having a molecular weight considerably larger than that the ordinary molecular weight of the polypropylene resin. The ultrahigh-molecular-weight polypropylene, as compared with ordinary high-molecular-weight polypropylene resins, is excellent in abrasion resistance, and has a low frictional property and a self-lubricating property. The ultrahigh molecular weight is 1,000,000 or above. The sealant layer 7 contains 5% wt. or above ultrahigh-molecular-weight polypropylene, preferably, 100% wt. ultrahigh-molecular-weight polypropylene. Ordinary high-molecular-weight polypropylene resins having a molecular weight below 1,000,000 are unsatisfactory in abrasion resistance, do not have low frictional property and self-lubricating property. Therefore, those ordinary high-molecular-weight polypropylene resins are unsuitable, in some cases, for forming the sealant layer 7.

The protective bag 3 is formed by folding the laminated film 8 in two or superposing the two laminating films 8 such that the nonoriented polypropylene resin layers 7 are in contact with each other, and heat-sealing the edges of the superposed laminated films 8 excluding those at an open end. Preferably, notches are formed respectively in the opposite side edges of the protective bag 3 to facilitate opening the protective bag 3.

The laminated film 8 forming the protective bag 3 may be formed by laminating is formed by laminating a 12 µm thick transparent, metallized polyester film, a 12 µm thick transparent, metallized polyester film,, a 15 µm thick stretched nylon film and the 70 µm thick nonoriented polypropylene resin film 7 containing an ultrahigh-molecular-weight polypropylene using an adhesive.

The fluid supplement bag package 1 of the present invention is subjected to a heat sterilization process at a temperature in the range of 120°C to 125°C for a time in the range of 30 to 45 min by an autoclave, not shown, to heat-sterilize the fluid supplement sealed in the fluid supplement pouch 2.

The fluid supplement bag package 1 of the present invention has the pouch formed from the polypropylene film and the protective bag 3 having the sealant layer 7, namely, the nonoriented polypropylene resin layer containing the ultrahigh-molecular-weight polypropylene, and the sealant layer has a rough surface. Therefore, the sealant layer 7 of the protective bag 3 does not adhere closely to the fluid supplement pouch 2 during the heat sterilization process for heat-sterilizing the fluid supplement contained in the fluid supplement pouch and hence the fluid supplement pouch 2 and the protective bag 3 will not be fused together. Since the sealant layer 7 of the protective bag 3 has a low frictional property, the fluid supplement pouch 2 can be easily taken out of the protective bag 3.

## Claims

1. A fluid supplement bag package comprising:
a fluid supplement bag formed by sealing a fluid supplement in a pouch; and
a protective bag sealing up the fluid supplement bag therein;
wherein the pouch is formed from a polypropylene film,
the protective bag has an outer layer of a polyester resin, and a sealant layer of a polypropylene resin containing an ultrahigh-molecular-weight polypropylene.

2. The fluid supplement bag package according to claim 1, wherein the sealant layer of the protective bag is a layer of a polypropylene resin containing a polypropylene having a molecular weight of 1,000,000 or above.

3. The fluid supplement bag package according to claim 1, wherein the sealant layer of the protective layer is a layer of a polypropylene resin containing 5% wt. or above polypropylene having a molecular weight of 1,000,000 or above.

4. The fluid supplement bag package according to claim 1, wherein the sealant layer of the protective bag is formed by bonding together films of a polypropylene resin containing a polypropylene having a molecular weight of 1,000,000 or above with a two-part adhesive.

5. A pouch formed from a laminated film including an outer layer of a polyester resin, and a sealant layer of a polypropylene resin containing an ultrahigh-molecular-weight polypropylene.

6. The pouch according to claim 5, wherein the sealant layer is a layer of a polypropylene resin containing a polypropylene having a molecular weight of 1,000,000 or above.

7. The pouch according to claim 5, wherein the sealant layer is a layer of a polypropylene resin containing at least 5% wt. polypropylene having a molecular weight of 1,000,000 or above.
